# EUROPEAN PATENT SPECIFICATION

(11) **EP 3 598 629 B1**
(45) Date of publication and mention of the grant of the patent: **23.03.2022**
(21) Application number: 19186836.3
(22) Date of filing: 17.07.2019
(51) Int. Cl.: H02M 7/483, H02M 7/487

(54) **H-TYPE MULTILEVEL POWER CONVERTER**
MEHRSTUFENSTROMWANDLER VOM H-TYP
CONVERTISSEUR DE PUISSANCE MULTINIVEAUX DE TYPE H

(30) Priority: 18.07.2018 US 201816038451
(43) Date of publication of application: 22.01.2020
(73) Proprietor: Hamilton Sundstrand Corporation, Charlotte, NC 28217-4578 (US)
(72) Inventor: KSHIRSAGAR, Parag M., South Windsor, CT 06074 (US)
(74) Representative: Dehns

(56) References cited:
- CN-A- 107 070 274
- JP-A- 2012 210 066
- JP-A- 2013 258 863
- US-A1- 2012 092 915
- SANDEEP N ET AL: "Operation and Control of a Nine-Level Modified ANPC Inverter Topology With Reduced Part Count for Grid-Connected Applications", IEEE TRANSACTIONS ON INDUSTRIAL ELECTRONICS, IEEE SERVICE CENTER, PISCATAWAY, NJ, USA, vol. 65, no. 6, 1 June 2018 (2018-06-01), pages 4810-4818, XP011677247, ISSN: 0278-0046, DOI: 10.1109/TIE.2017.2774723 [retrieved on 2018-02-14]

## Description

### BACKGROUND

The present disclosure relates generally to power converters, and more specifically, to an H-type multilevel power converter, such as those used on aircrafts and other vehicles.

Power converters are used to transform signals of a first form to another form. For example, power converters can be arranged to receive a direct current (DC) signal and convert the DC signal to an alternating current (AC) signal having various frequency and voltage characteristics. In addition, power converters can include those that transform DC voltages from a first level to a second level such as buck converters and boost converters. Power converters can also be configured to receive an AC signal and convert the signal to a DC signal by rectifying the received signal. Various electronic devices and equipment have different power requirements and may require power conversion according to the application it is used for.

Examples of multilevel power converters utilising H-bridges with floating capacitors are described in JP2013258863, US2012092915, JP2012210066, CN107070274, and the IEEE-publication "Operation and Control of a Nine-Level Modified ANPC Inverter Topology With Reduced Part Count for Grid-Connected Applications".

### BRIEF DESCRIPTION

The invention is defined by the features of the independent device claims 1 and 12 and method claim 6. The dependent claims recite advantageous embodiments of the invention.

According to one embodiment, a circuit for an H-type multilevel power converter is provided, as set forth in claim 1.

In addition to one or more of the features described above, or as an alternative, further embodiments may include an H-bridge switching network that has a plurality of switching devices, wherein the switching devices are at least one of silicon-based devices or wide-band gap devices.

In addition to one or more of the features described above, or as an alternative, further embodiments may include an H-bridge switching network that has a plurality of H-bridge switching networks, wherein in each of the plurality of H-bridge switching networks are coupled to a respective output of the circuit.

In addition to one or more of the features described above, or as an alternative, further embodiments may include a plurality of H-bridge switching networks, where each H-bridge switching network is coupled to a respective output inverter stage.

In addition to one or more of the features described above, or as an alternative, further embodiments may include an output inverter stage that provides two voltage levels.

In addition to one or more of the features described above, or as an alternative, further embodiments may include an output inverter stage that is configured to provide a 3-phase output.

In addition to one or more of the features described above, or as an alternative, further embodiments may include an H-bridge switching network that provides three additional voltage levels.

In addition to one or more of the features described above, or as an alternative, further embodiments may include switches for the output inverter stage that are at least one of silicon-based devices or wide-band gap devices.

According to another embodiment, a method for operating an H-type multilevel converter is provided, as set forth in claim 6.

In addition to one or more of the features described above, or as an alternative, further embodiments may include coupling a DC link filter to the H-bridge switching network.

In addition to one or more of the features described above, or as an alternative, further embodiments may include when operating the switches of the output inverter stage, current is inhibited from flowing through the H-bridge switching network.

In addition to one or more of the features described above, or as an alternative, further embodiments may include when operating switches of the H-bridge switching network, current is inhibited from flowing through the output inverter stage switches.

In addition to one or more of the features described above, or as an alternative, further embodiments may include an H-bridge switching network that includes a plurality of switching devices.

In addition to one or more of the features described above, or as an alternative, further embodiments may include an H-bridge switching network comprises a plurality of switching devices, wherein the plurality of switching devices are at least one of silicon-based devices or wide-band gap devices.

In addition to one or more of the features described above, or as an alternative, further embodiments may include an H-bridge switching network having a plurality of H-bridge switching networks, wherein in each of the plurality of H-bridge switching networks is coupled to a respective output of the circuit.

In addition to one or more of the features described above, or as an alternative, further embodiments may include an H-bridge switching network having a plurality of H-bridge switching networks, where each H-bridge switching network is coupled to a respective output inverter stage.

In addition to one or more of the features described above, or as an alternative, further embodiments may include an H-type multilevel converter that is configured to provide a 3-phase output.

In addition to one or more of the features described above, or as an alternative, further embodiments may include an output inverter stage that provides two voltage levels and a 3-phase output, and wherein the H-bridge switching network is configured to provide three additional voltage levels.

According to a different embodiment, a controller for an H-type multilevel converter is provided, as set forth in claim 12.

In addition to one or more of the features described above, or as an alternative, further embodiments may include first reference signals that are triangle waves and a second reference signal that is a voltage reference signal.

In addition to one or more of the features described above, or as an alternative, further embodiments may include offset signals that are provided to each of the plurality of adders to operate in different ranges to control switching of the H-type multilevel converter.

In addition to one or more of the features described above, or as an alternative, further embodiments may include switches for the output inverter stage that are silicon and wide-band gap devices.

### BRIEF DESCRIPTION OF THE DRAWINGS

The following descriptions should not be considered limiting in any way. With reference to the accompanying drawings, like elements are numbered alike:
FIG. 1 depicts a two-level power converter;
FIG. 2 depicts a practical H-type multilevel power converter in accordance with one or more embodiments;
FIG. 3 depicts a logic table for controlling the switches of the practical H-type-multilevel power converter in accordance with one or more embodiments;
FIG. 4 depicts an ideal 6-switch H-bridge multilevel circuit;
FIG. 5 depicts a gating logic circuit for the 6-switch H-bridge multilevel circuit;
FIG. 6 depicts the reference signals used in the 6-switch H-bridge multilevel circuit;
FIG. 7 depicts a diagram for the voltage-current characteristics when operating the H-type multilevel power converter in accordance with one or more embodiments;
FIG. 8 depicts a diagram for the current characteristics when operating the H-type multilevel power converter in accordance with one or more embodiments; and
FIG. 9 depicts a flow diagram for operating the 6-switch H-bridge multilevel circuit in accordance with one or more embodiments.

### DETAILED DESCRIPTION

A single channel aircraft flight control rotary actuator consists of gearbox, motor and drive electronics and controller. More than 50% of the actuator volume and weight is occupied by the drive electronics and passive filters due to stringent requirements for power quality and electromagnetic interference (EMI) for aircrafts. Additionally, the power stage is a significant source of heat generation in the composite wing structure which only allows for convectional cooling.

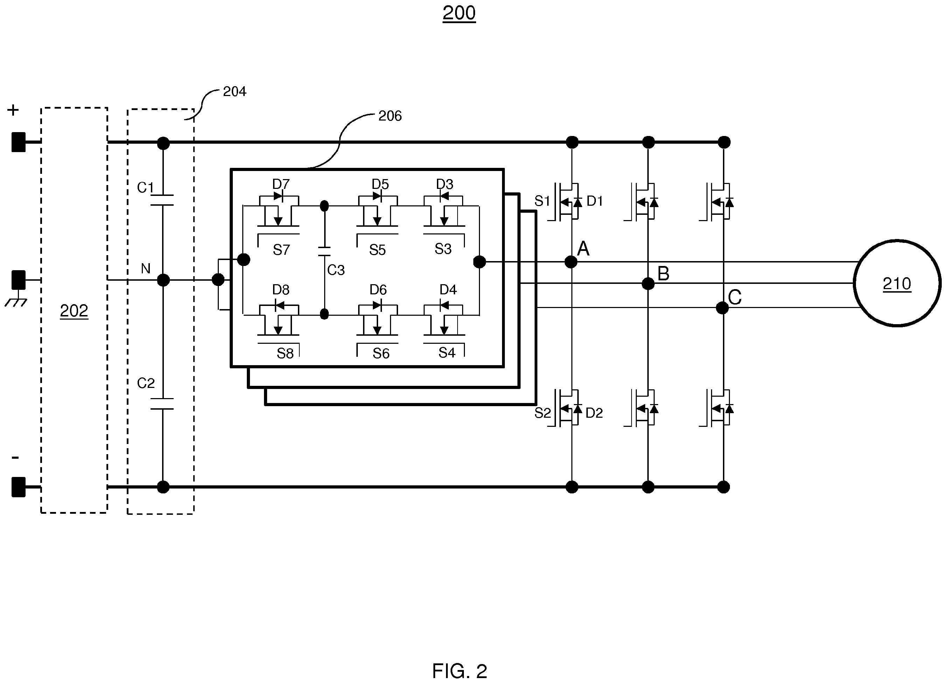

Applications of power converters are critical to ensuring the safety of the aircraft and its passengers and it requires the highest reliability for the drive electronics. To address these challenges, one or more embodiments described herein apply wide-band gap (WBG) devices in a novel H-type 5-level power converter topology as discussed below with reference to FIG. 2.

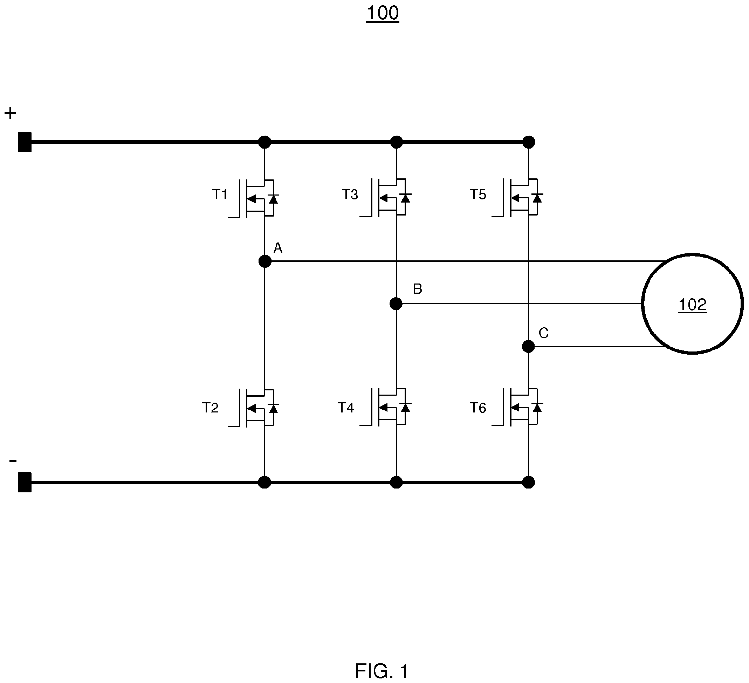

The H-bridge switching network (S3-S8 and C3) of FIG. 2 is connected between the DC link neutral point (N) and the motor phase terminals (A, B, C) which introduces three additional voltage levels to the two-level power converter shown in FIG. 1, resulting in a 5-leve 1 voltage waveform with the following steps: -V_{dc}/2, - V_{dc} /4, 0, V_{dc}/4, and V_{dc}/2. This topology results in 4-times lower harmonic distortion than the conventional two level inverter.

Now referring to FIG. 1, a two-level power converter 100 is shown. The two-level power converter 100 includes a positive (+) power supply rail voltage and a negative (-) power supply rail voltage to provide DC power to the power converter 100. The power converter 100 includes a plurality of switches T1-T6, where each switch T1-T6 includes a corresponding diode to prevent unwanted current from flowing in the opposite direction. The switches T1 and T2 are coupled to the output for phase A, switches T3 and T4 are coupled to the output for phase B, and switches T5 and T6 are coupled to the output for phase C. The A phase is 120° degrees offset from the B phase which is 120° out of phase with the C phase. The switches T1-T6 are coupled to the respective outputs A, B, and C and operate as inverters where one of the switches in the pair of switches is in the ON state while the other switch in the pair is in the OFF state. For example, the first switch T1 is in the ON state while the other switch T2 is in the OFF state. In another example, the first switch T1 is in the OFF state while the other switch T2 in in the ON state.

In FIG. 2, an H-type multilevel power converter 200 in accordance with one or more embodiments is shown. The converter 200 includes a positive (+) rail, a neutral point (N), and a negative (-) rail. In one or more embodiments, the neutral point N can be operably coupled to ground. The power supply voltage inputs are coupled to an EMI 202 to reduce and/or eliminate unwanted signal/power deviations. As shown in FIG. 2, the EMI filter 202 is coupled to a DC link capacitor 204 which includes capacitors C1 and C2. The capacitor C1 as shown is coupled to positive (+) rail and the neutral point and the capacitor C2 is coupled to the neutral point and to negative (-) rail.

The power converter 200 includes an H-bridge switching network 206 having switches S3-S8, diodes D3-D8, and capacitor C3. The H-bridge switching network 206 provides additional voltage levels. The H-bridge switching network 206 can include a plurality of separate H-bridge switching networks that are coupled to respective outputs of the power converter 200 such as outputs A, B, and C. The H-bridge switching network 206 is coupled to the output switching stage having pairs of switches S1, S2 and diodes D1, D2 that are configured in an inverter configuration.

One of the switches in the pair of switches, for example the switch S1, is coupled to the positive (+) voltage rail and an output A of the power converter 200 and the other switch of the pair, switch S2, is coupled to the output A and the negative (-) voltage rail. The switching pairs of the other outputs B and C are configured in a similar manner as output A where the combination of the outputs A, B, and C provides a three-phase output. In one or more embodiments, the three-phase output can be used for different applications such as supplying power to a three-phase motor 210. It should be understood that other configurations can be used having different phases and output levels (voltage, current) to provide power for various applications.

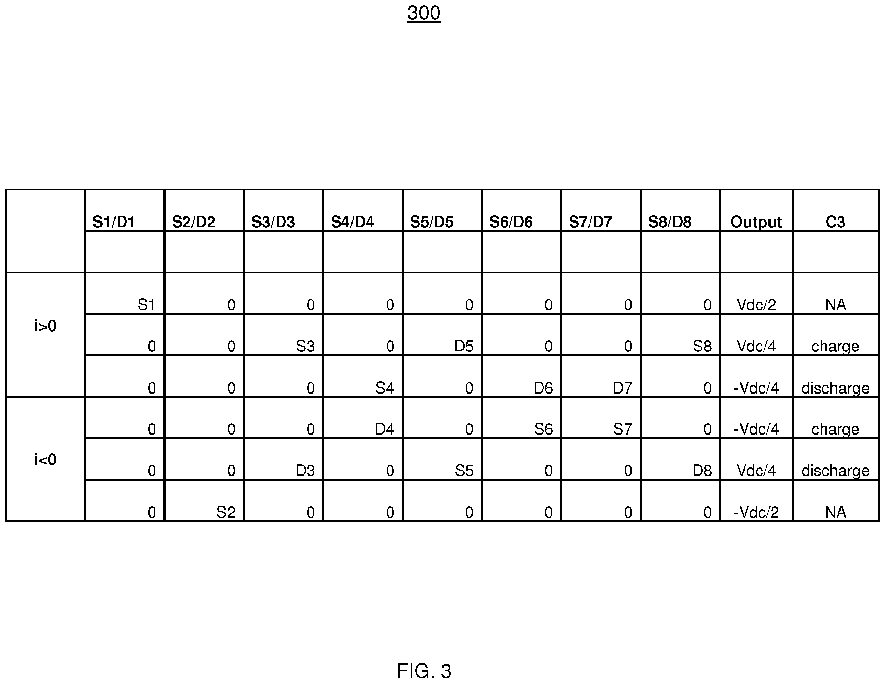

In FIG. 3, a logic table 300 for controlling the switches S1-S8 of the power converter 200 in accordance with one or more embodiments is shown. A controller (not shown) is coupled to each of the switches S1-S8 to produce the desired output level during operation. The logic table 300 provides the state for each switch (Sn) and diode (Dn), the output voltage, and the charging state of the capacitor (C3) during operation. A "0" indicates the switch is OFF and no current is flowing through the switch/diode.

When the switch S1 is switched to the ON state by the controller, the output is connected to the positive voltage rail and the output voltage is Vdc/2. A positive current flows from the DC power supply through the switch S1 to the output A. When the switch S2 is switched to the ON state, the output is connected to the negative voltage rail and the output voltage is -Vdc/2 and a negative current flows through the output A. In both instances, the capacitor C3 of the H-bridge network is not in a charged state.

When the switches S3 and S8 are switched ON, the diode D5 allows a positive current to flow to the output and the output voltage is Vdc/4. The state of the capacitor C3 is a charged state. When the switch S4 is switched ON, the diodes D6 and D7 allow a positive current to flow to the output and the output voltage is -Vdc/4. The state of the capacitor C3 is a discharged state. When the switches S6 and S7 are switched ON, the diode D4 allows a negative current to flow to the output and the output voltage is -Vdc/4. The state of the capacitor C3 is a charged state. Finally, when the switch S5 is switched ON, the diodes D3 and D8 allow a negative current to flow to the output and the output voltage is Vdc/4. The state of the capacitor C3 is a discharged state. It should be understood the power converter 200 can be configured in different arrangements to produce various output levels (voltage, current) based on the requirements of its application.

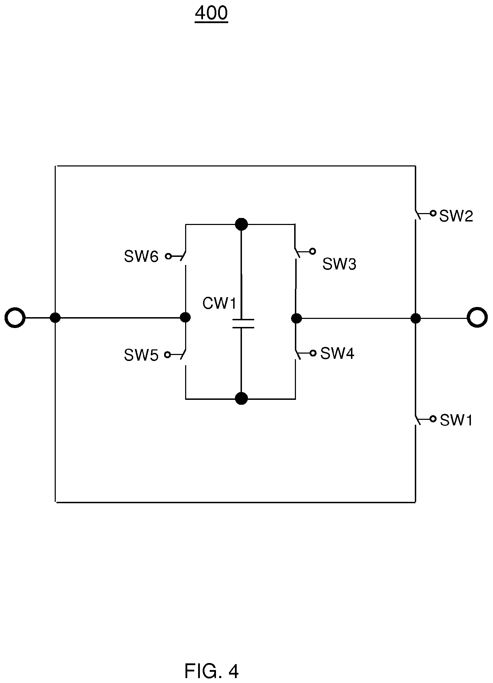

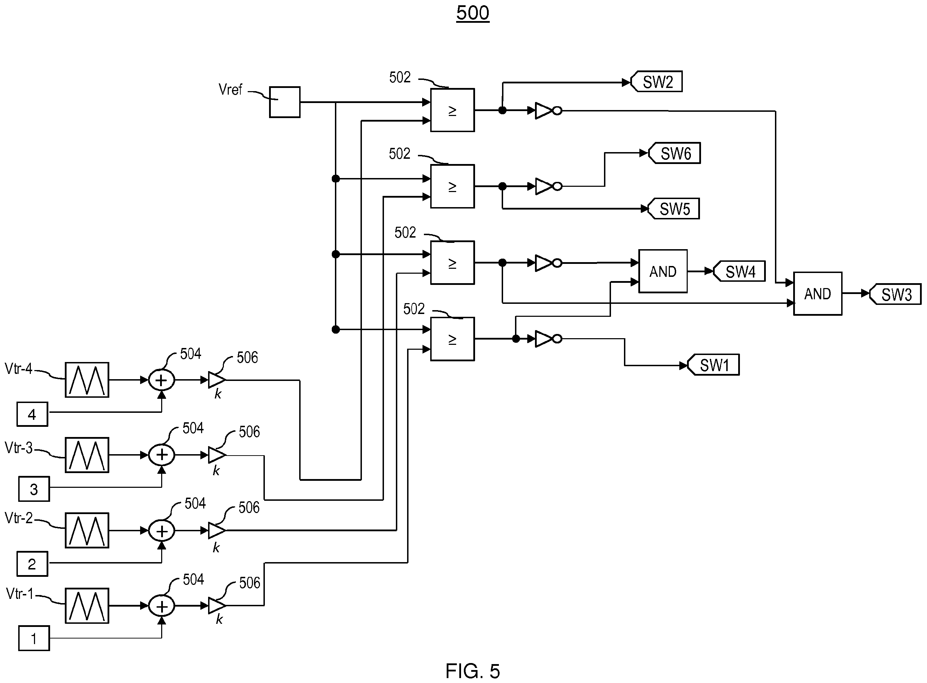

Referring now to FIG. 4, an ideal 6-switch H-bridge multilevel circuit 400 is shown. The H-bridge circuit 400 includes four switches SW3 - SW6 and is coupled to output stage ideal switches SW1, SW2. The H-bridge multilevel circuit 400 also includes a capacitor CW1 that is configured to be charged and discharged to produce the desired output voltage levels. The switching of each of the switches SW1 - SW6 is described with reference to FIG. 5.

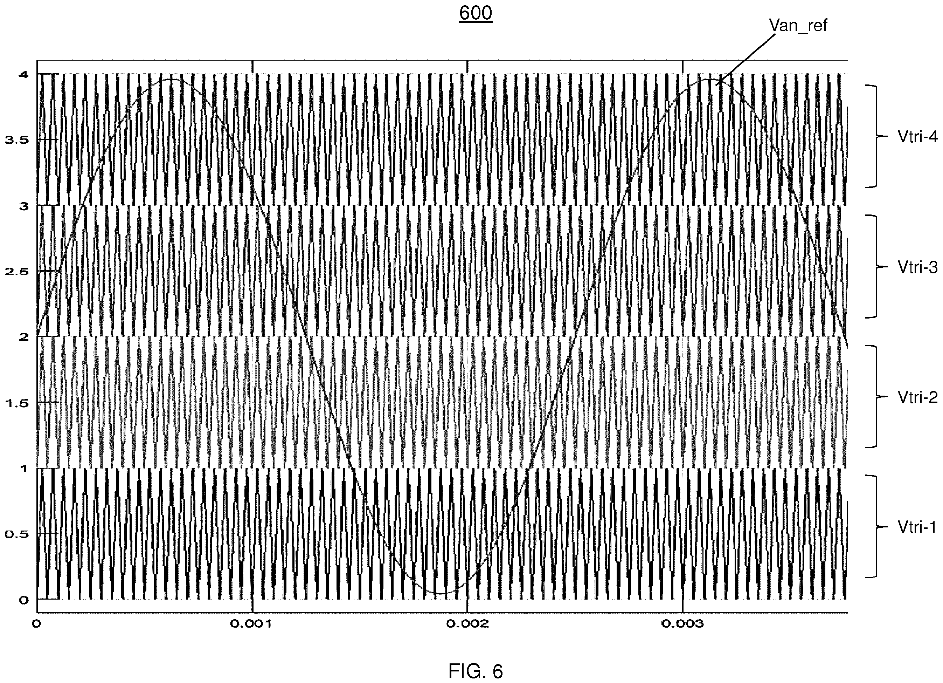

Now referring to FIG. 5, a gating logic circuit 500 to control the switching of the switches SW1 - SW6 of 6-switch H-bridge multilevel circuit 400 of FIG. 4 is shown. In one or more embodiments, the gating logic circuit 500 can be implemented in a controller (not shown) to control the switching of the 6-switch H-bridge multilevel circuit. The gating logic circuit 500 receives a reference signal (Vref) at the comparators 502. The comparators 502 also receive a triangle wave signal (Vtri-1 - Vtri-4) after passing through ADDER circuits 504 and amplifiers 506. The ADDER circuit 504 combines the triangle wave signal Vtri-1 - Vtri-4 with an offset 1-4 that is displayed in the graph 600 shown in FIG. 6. The comparators 502 perform the comparison of the reference signal Vref and the triangle wave signal to control the switching of each switch SW1 - SW6. It should be understood that the gating logic 500 can be applied to different circuits having different number of switches and H-bridge circuits such as that shown in FIG. 2.

In FIG. 6, a graph 600 depicts the signals that are compared at the comparator to control the switching of each of switches (SW1 - SW6). The x-axis represents time and the y-axis represents the voltage of the signals. A reference triangle wave signal is compared against the sine wave reference signal. In this example, since there are four switches in the H-bridge, there are four different operating voltage ranges. A first triangle wave (Vtri-1) operates from 0 to IV, a second triangle wave (Vtri-2) operates from 1 to 2V, a third triangle wave (Vtri-3), and a fourth triangle (Vtri-4). When the triangle wave signal is larger than the reference signal, the respective switch is switched ON. Otherwise the switch remains OFF. The comparison determines when each switch SW1-SW6 turns ON and also how long the switch remains ON.

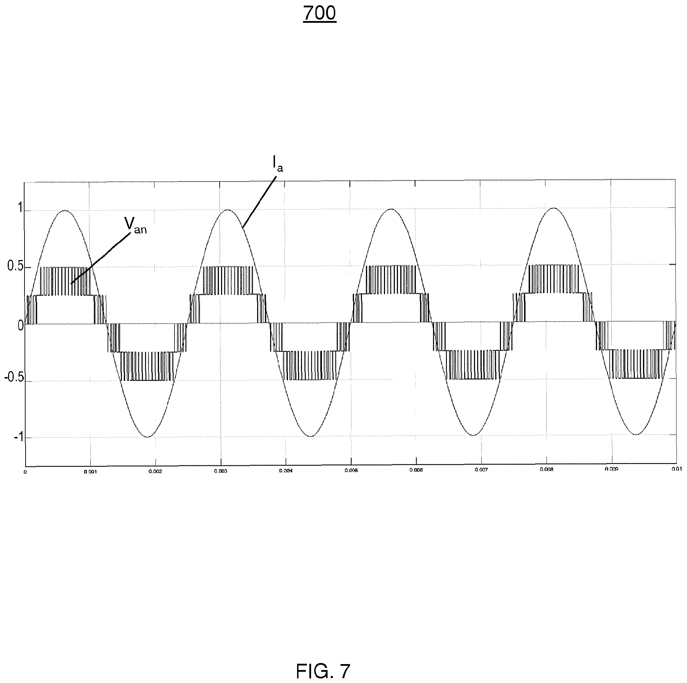

Referring now to FIG. 7, a timing diagram 700 for operating the H-type multilevel power converter in accordance with one or more embodiments is shown. The timing diagram 700 depicts characteristics of the voltage *Vₐₙ* and current *I*ₐ for the output A of the power converter 200. It should be understood that the outputs B and C exhibit similar output characteristics where the phase of each output is shifted by 120° and 240°, respectively. The voltage levels as shown in the logic table 300 of FIG. 3 include the voltage levels -V_{dc}/2, -V_{dc} /4, 0, V_{dc}/4, and V_{dc}/2, and in this particular nonlimiting example, the voltage levels are -0.5 p.u. (per unit value), -0.25 p.u., 0 p.u., 0.25 p.u., and 0.5 p.u. as shown in the timing diagram 400. Also, FIG. 4 depicts the output current *Iₐ* for the output A. The y-axis of the waveform indicates the voltage and current are a function of time and are measured for the output A during operation. The additional power levels (-Vdc/4, 0, Vdc/4) that are provided by the power converter 200 reduces the amount of harmonic distortion of the output signal which increases the quality of the signal.

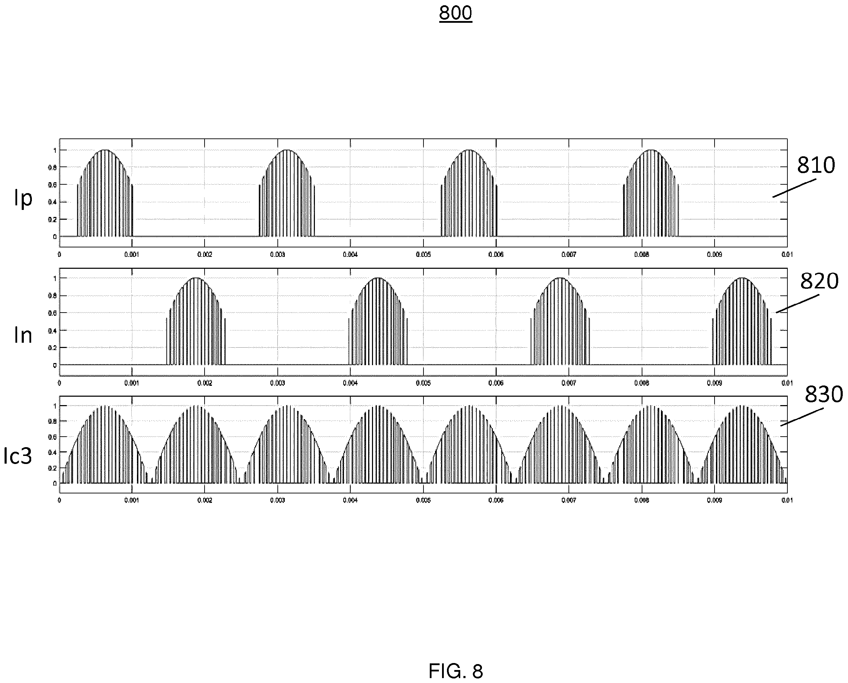

In FIG. 8, a plurality of waveforms 800 are shown in accordance with one or more embodiments is shown. The waveform 810 depicts the positive current *Ip* in the converter 200, and the waveform 820 depicts the negative current *In.* The waveform 830 shown in FIG. 8 depicts the current *IC3* that charges and discharges the capacitor C3 of the H-bridge network during operation.

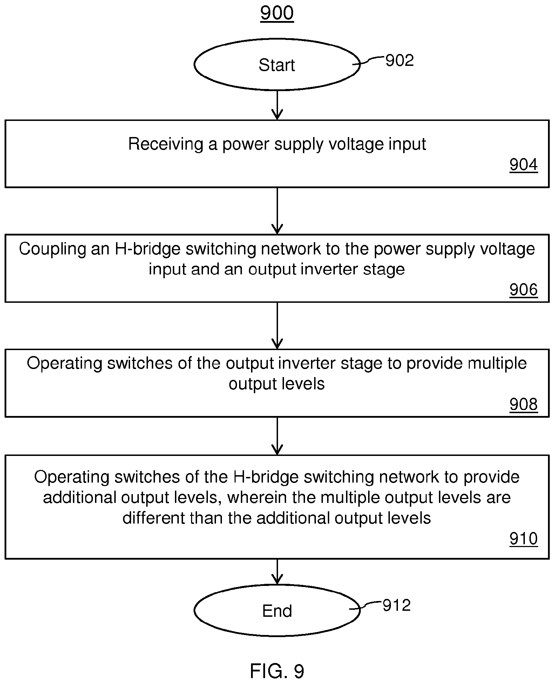

In FIG. 9, a flowchart for a method 900 for operating a multilevel H-type converter in accordance with one or more embodiments is shown. In one or more embodiments, the method 900 is implemented to operate the circuit shown in FIG. 2. The method 900 begins at block 902 and continues to block 904 which provides for receiving a power supply voltage input.

The method 900 continues to block 906 which provides for coupling an H-bridge switching network to the power supply voltage input and an output inverter stage. In one or more embodiments, the output inverter stage includes a pair of switches operating in a complementary mode.

At block 908, the method 900 provides for operating switches of the output inverter stage to provide multiple output levels. In one or more embodiments, the output inverter stage includes a pair of switches that are coupled to the power supply voltage rails. Each pair of switches operates in a complementary fashion and connects the output of each pair either to the positive voltage rail or the negative voltage rail. Operating the switches in a complementary mode prevents shorts from occurring at the output of the circuit.

The method 900 proceeds to block 910 and includes operating switches of the H-bridge switching network to provide additional output levels, wherein the multiple output levels are different from the additional output levels. In one or more embodiments, the H-bridge switching network provides three additional voltage levels. However, it should be understood that various voltage levels and the number of voltage levels can be configured for the power converter.

The technical benefits and effects include improved reliability through higher voltage margins, higher power density through higher switching frequencies, and reduced thermal loads with lower semiconductor transistor losses. The technical benefits and effects also include reduced harmonic distortion in the output signal providing a higher quality signal.

The architecture does not require current to flow through multiple switches to the output inverter stage and the H-bridge switching network. In one or more embodiments, the H-bridge switching network only receives power during operation which increases the life of the switches S3-S8 in the H-bridge switching network. Therefore, the number of switches that the current must pass through is reduced when compared to other designs and increases the life of the devices. In this configuration, the current is either supplied from the H-bridge or a switch from the output inverter stage to the output.

The techniques described herein enable electromechanical actuators to be low-profile, lightweight, reliable and pave the way for achieving transformative thin wing designs for the next generation of aircrafts. While the aerospace industry is anticipated to be an early adopter, this technology will also have a significant impact on other industries such as automotive, rail, renewables, etc.

A detailed description of one or more embodiments of the disclosed apparatus and method are presented herein by way of exemplification and not limitation with reference to the Figures.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A circuit for an H-type multiple level converter, the circuit comprising:
power supply voltage rails and a DC link neutral point (N);
a DC link capacitor (204) coupled to the power supply voltage rails;
an H-bridge switching network (206), wherein the H-bridge switching network is connected to the DC link neutral point (N) and an output inverter stage; and
the output inverter stage, wherein the output inverter stage comprises one or more pairs of switches that are directly connected to an output phase (A, B, C) and are configured to operate in a complementary mode, each pair of switches comprising a first switch (S1) and a second switch (S2), wherein a controller is coupled to the H-bridge switching network and the output inverter stage and
is configured to control the switching of the H-bridge switching network and the output inverter stage;
wherein the H-bridge switching network (206) comprises a plurality of H-bridge switching networks, and H-bridge switching network (206) of the plurality of H-bridge switching networks is coupled to a respective output phase (A, B, C) of the inverter stage,
**characterized in that**
the H-bridge switching network (206) comprises six switching devices (S3-S8) including a third switching device (S3, D3), a fourth switching device (S4, D4), a fifth switching device (S5, D5), a sixth switching device (S6, D6), a seventh switching device (S7, D7) and an eighth switching device (S8, D8), and one or more floating capacitors (C3) having a positive pole and a negative pole, wherein the third switching device (S3, D3) and the fifth switching device (S5, D5) are directly connected in anti-series between the positive pole of the floating capacitor (C3) and a respective output phase (A, B, C); the fourth switching device (S4, D4) and the sixth switching device (S6, D6) are directly connected in anti-series between the negative pole of the floating capacitor (C3) and the respective output phase (A, B, C); the seventh switching device (S7, D7) is directly connected between the DC link neutral point (N) and the positive pole of the floating capacitor (C3); the eighth switching device (S8, D8) is directly connected between the DC link neutral point (N) and the negative pole of the floating capacitor (C3); and
wherein each of the plurality of H-bridge switching networks (206) is directly connected to an output phase (A, B, C) of the circuit, wherein the output phases of the circuit are the output phases (A, B, C) of the inverter stage.

2. The circuit of claim 1, wherein the six switching devices are at least one of silicon-based devices or wide-band gap devices.

3. The circuit of any preceding claim, wherein the output inverter stage is configured to provide two voltage levels; or wherein the output inverter stage is configured to provide a 3-phase output.

4. The circuit of any preceding claim, wherein the H-bridge switching network (206) is configured to provide a plurality of additional voltage levels.

5. The circuit of any preceding claim, wherein switches of the output inverter stage are at least one of silicon-based devices or wide-band gap devices.

6. A method for operating an H-type multilevel converter, the method comprising:
receiving a power supply voltage input;
coupling an H-bridge switching network to a DC link neutral point (N) and an output inverter stage;
operating switches of the output inverter stage that are configured to provide multiple output levels;
operating switches of the H-bridge switching network that are configured to provide additional output levels, wherein the multiple output levels are different than the additional output levels;
wherein the H-bridge switching network (206) of the H-type multiple level converter is configured according to claim 1.

7. The method of claim 6, further comprising coupling a DC link capacitor to the H-bridge switching network.

8. The method of claims 6 or 7, wherein operating switches of the output inverter stage comprises the step of
inhibiting current flow through the H-bridge switching network; or
wherein operating switches of the H-bridge switching network comprises the step of inhibiting current flow through the output inverter stage switches.

9. The method of any of claims 6-8, wherein the six switching devices are at least one of silicon-based devices or wide-band gap devices.

10. The method of any of claims 6-9, wherein each H-bridge switching network of the plurality of H-bridge switching networks is coupled to a respective output inverter stage, and preferably wherein the H-type multilevel converter is configured to provide a 3-phase output.

11. The method of claim 6, wherein the output inverter stage is configured to provide two voltage levels, and wherein the H-bridge switching network is configured to provide a plurality of additional voltage levels.

12. A controller for an H-type multilevel converter, the controller comprising:
a plurality of adder circuits (504) configured to receive first reference signals and offset signals;
a plurality of amplifiers (506) in communication with the plurality of adder circuits, wherein the plurality of amplifiers are configured to amplify a signal that is output from the plurality of adder circuits;
a plurality of comparators (502) in communication with the plurality of amplifiers, wherein the plurality of comparators are configured to receive a second reference signal and output signals from the plurality of amplifiers; and
a plurality of outputs of the comparators that are configured to be in communication with the H-type multilevel converter;
wherein the H-type multilevel converter is configured to control an H-bridge switching network (206) that is configured according to claim 1.

13. The controller of claim 12, wherein the first reference signals are triangle waves and the second reference signal is a voltage reference signal, and preferably wherein the offset signals provided to each of the plurality of adders operate in different ranges to control switching of the H-type multilevel converter.

## Patentansprüche

1. Schaltkreis für einen Mehrstufenwandler vom H-Typ, wobei der Schaltkreis Folgendes umfasst:
Versorgungsspannungsschienen und einen Zwischenkreisneutralpunkt (N);
einen Zwischenkreiskondensator (204), der mit den Versorgungsspannungsschienen gekoppelt ist;
ein H-Brücken-Schaltnetzwerk (206), wobei das H-Brücken-Schaltnetzwerk mit dem Zwischenkreisneutralpunkt (N) und einer Ausgangswechselrichterstufe verbunden ist; und
die Ausgangswechselrichterstufe, wobei die Ausgangswechselrichterstufe ein oder mehrere Paare von Schaltern umfasst, die direkt mit einer Ausgangsphase (A, B, C) verbunden sind und so konfiguriert sind, dass sie komplementär arbeiten, wobei jedes Paar von Schaltern einen ersten Schalter (S1) und einen zweiten Schalter (S2) umfasst, wobei eine Steuerung mit dem H-Brücken-Schaltnetzwerk und der Ausgangswechselrichterstufe gekoppelt ist und so konfiguriert ist, dass sie das Schalten des H-Brücken-Schaltnetzwerks und der Ausgangswechselrichterstufe steuert;
wobei das H-Brücken-Schaltnetzwerk (206) eine Vielzahl von H-Brücken-Schaltnetzwerken umfasst und jedes H-Brücken-Schaltnetzwerk (206) aus der Vielzahl von H-Brücken-Schaltnetzwerken mit einer jeweiligen Ausgangsphase (A, B, C) der Wechselrichterstufe gekoppelt ist,
**dadurch gekennzeichnet, dass**
das H-Brücken-Schaltnetzwerk (206) sechs Schaltvorrichtungen (S3-S8), die eine dritte Schaltvorrichtung (S3, D3), eine vierte Schaltvorrichtung (S4, D4), eine fünfte Schaltvorrichtung (S5, D5), eine sechste Schaltvorrichtung (S6, D6), eine siebte Schaltvorrichtung (S7, D7) und eine achte Schaltvorrichtung (S8, D8) beinhalten, und einen oder mehrere Floating-Kondensatoren (C3) umfasst, die einen positiven Pol und einen negativen Pol aufweisen, wobei die dritte Schaltvorrichtung (S3, D3) und die fünfte Schaltvorrichtung (S5, D5) direkt in Gegenreihe zwischen dem positiven Pol des Floating-Kondensators (C3) und einer jeweiligen Ausgangsphase (A, B, C) verbunden sind; die vierte Schaltvorrichtung (S4, D4) und die sechste Schaltvorrichtung (56, D6) direkt in Gegenreihe zwischen dem negativen Pol des Floating-Kondensators (C3) und der jeweiligen Ausgangsphase (A, B, C) verbunden sind; die siebte Schaltvorrichtung (S7, D7) direkt zwischen dem Zwischenkreisneutralpunkt (N) und dem positiven Pol des Floating-Kondensators (C3) verbunden sind; die achte Schaltvorrichtung (S8, D8) direkt zwischen dem Zwischenkreisneutralpunkt (N) und dem negativen Pol des Floating-Kondensators (C3) verbunden ist; und
wobei jedes aus der Vielzahl von H-Brücken-Schaltnetzwerken (206) direkt mit einer Ausgangsphase (A, B, C) des Schaltkreises verbunden ist, wobei die Ausgangsphasen des Schaltkreises die Ausgangsphasen (A, B, C) der Wechselrichterstufe sind.

2. Schaltkreis nach Anspruch 1, wobei die sechs Schaltvorrichtungen mindestens eines aus Vorrichtungen auf Siliciumbasis oder Vorrichtungen mit breitem Bandabstand sind.

3. Schaltkreis nach einem der vorstehenden Ansprüche, wobei die Ausgangswechselrichterstufe so konfiguriert ist, dass sie zwei Spannungspegel bereitstellt; oder wobei die Ausgangswechselrichterstufe so konfiguriert ist, dass sie einen Dreiphasenausgang bereitstellt.

4. Schaltkreis nach einem der vorstehenden Ansprüche, wobei das H-Brücken-Schaltnetzwerk (206) so konfiguriert ist, dass es eine Vielzahl von zusätzlichen Spannungspegeln bereitstellt.

5. Schaltkreis nach einem der vorstehenden Ansprüche, wobei Schalter der Ausgangswechselrichterstufe mindestens eines aus Vorrichtungen auf Siliciumbasis oder Vorrichtungen mit breitem Bandabstand sind.

6. Verfahren zum Betreiben eines Mehrstufenwandlers vom H-Typ, wobei das Verfahren Folgendes umfasst:
Aufnehmen eines Versorgungsspannungseingangs;
Koppeln eines H-Brücken-Schaltnetzwerks mit einem Zwischenkreisneutralpunkt (N) und einer Ausgangswechselrichterstufe;
Betreiben von Schaltern der Ausgangswechselrichterstufe, die so konfiguriert sind, dass sie mehrere Ausgangspegel bereitstellen;
Betreiben von Schaltern des H-Brücken-Schaltnetzwerks, die so konfiguriert sind, dass sie zusätzliche Ausgangspegel bereitstellen, wobei sich die mehreren Ausgangspegel von den zusätzlichen Ausgangspegeln unterscheiden;
wobei das H-Brücken-Schaltnetzwerk (206) des Mehrstufenwandlers vom H-Typ nach Anspruch 1 konfiguriert ist.

7. Verfahren nach Anspruch 6, ferner das Koppeln eines Zwischenkreiskondensators mit dem H-Brücken-Schaltnetzwerk umfassend.

8. Verfahren nach Anspruch 6 oder 7, wobei das Betreiben von Schaltern der Ausgangswechselrichterstufe den Schritt des Verhinderns eines Stromflusses durch das H-Brücken-Schaltnetzwerk umfasst; oder
wobei das Betreiben von Schaltern des H-Brücken-Schaltnetzwerks den Schritt des Verhinderns eines Stromflusses durch die Ausgangswechselrichterstufenschalter umfasst.

9. Verfahren nach einem der Ansprüche 6-8, wobei die sechs Schaltvorrichtungen mindestens eines aus Vorrichtungen auf Siliciumbasis oder Vorrichtungen mit breitem Bandabstand sind.

10. Verfahren nach einem der Ansprüche 6-9, wobei jedes H-Brücken-Schaltnetzwerk aus der Vielzahl von H-Brücken-Schaltnetzwerken mit einer jeweiligen Ausgangswechselrichterstufe gekoppelt ist, und bevorzugt wobei der Mehrstufenwandler vom H-Typ so konfiguriert ist, dass er einen Dreiphasenausgang bereitstellt.

11. Verfahren nach Anspruch 6, wobei die Ausgangswechselrichterstufe so konfiguriert ist, dass sie zwei Spannungspegel bereitstellt, und wobei das H-Brücken-Schaltnetzwerk so konfiguriert ist, dass es eine Vielzahl von zusätzlichen Spannungspegeln bereitstellt.

12. Steuerung für einen Mehrstufenwandler vom H-Typ, wobei die Steuerung Folgendes umfasst:
eine Vielzahl von Addierer-Schaltkreisen (504), die so konfiguriert sind, dass sie erste Referenzsignale und Offset-Signale empfangen;
eine Vielzahl von Verstärkern (506) in Kommunikation mit der Vielzahl von Addierer-Schaltkreisen, wobei die Vielzahl von Verstärkern so konfiguriert sind, dass sie ein Signal verstärken, das von der Vielzahl von Addierer-Schaltkreisen ausgegeben wird;
eine Vielzahl von Komparatoren (502) in Kommunikation mit der Vielzahl von Verstärkern, wobei die Vielzahl von Komparatoren so konfiguriert sind, dass sie ein zweites Referenzsignal und Ausgangssignale von der Vielzahl von Verstärkern empfangen; und
eine Vielzahl von Ausgängen der Komparatoren, die so konfiguriert sind, dass sie in Kommunikation mit dem Mehrstufenwandler vom H-Typ stehen;
wobei der Mehrstufenwandler vom H-Typ so konfiguriert ist, dass er ein H-Brücken-Schaltnetzwerk (206) steuert, das nach Anspruch 1 konfiguriert ist.

13. Steuerung nach Anspruch 12, wobei die ersten Referenzsignale Dreieckwellen sind und das zweite Referenzsignal ein Spannungsreferenzsignal ist, und bevorzugt wobei die Offset-Signale, die jedem aus der Vielzahl von Addierern bereitgestellt werden, in verschiedenen Bereichen arbeiten, um das Schalten des Mehrstufenwandlers vom H-Typ zu steuern.

## Revendications

1. Circuit pour un convertisseur multiniveaux de type H, le circuit comprenant :
des rails de tension d'alimentation et un point neutre de liaison CC (N) ;
un condensateur de liaison CC (204) couplé aux rails de tension d'alimentation ;
un réseau de commutation à pont en H (206), dans lequel le réseau de commutation à pont en H est relié au point neutre de liaison CC (N) et à un étage inverseur de sortie ; et
l'étage inverseur de sortie, dans lequel l'étage inverseur de sortie comprend une ou plusieurs paires de commutateurs qui sont reliés directement à une phase de sortie (A, B, C) et sont conçus pour fonctionner dans un mode complémentaire, chaque paire de commutateurs comprenant un premier commutateur (S1) et un second commutateur (S2), dans lequel un dispositif de commande est couplé au réseau de commutation à pont en H et à l'étage inverseur de sortie et est conçu pour commander la commutation du réseau de commutation à pont en H et de l'étage inverseur de sortie ;
dans lequel le réseau de commutation à pont en H (206) comprend une pluralité de réseaux de commutation à pont en H, et chaque réseau de commutation à pont en H (206) de la pluralité de réseaux de commutation à pont en H est couplé à une phase de sortie (A, B, C) respective de l'étage inverseur,
**caractérisé en ce que**
le réseau de commutation à pont en H (206) comprend six dispositifs de commutation (S3-S8) comportant un troisième dispositif de commutation (S3, D3), un quatrième dispositif de commutation (S4, D4), un cinquième dispositif de commutation (S5, D5), un sixième dispositif de commutation (S6, D6), un septième dispositif de commutation (S7, D7) et un huitième dispositif de commutation (S8, D8), et un ou plusieurs condensateurs flottants (C3) ayant un pôle positif et un pôle négatif, dans lequel le troisième dispositif de commutation (S3, D3) et le cinquième dispositif de commutation (S5, D5) sont reliés directement en anti-série entre le pôle positif du condensateur flottant (C3) et une phase de sortie (A, B, C) respective ; le quatrième dispositif de commutation (S4, D4) et le sixième dispositif de commutation (S6, D6) sont reliés directement en anti-série entre le pôle négatif du condensateur flottant (C3) et la phase de sortie (A, B, C) respective ; le septième dispositif de commutation (S7, D7) est relié directement entre le point neutre de liaison CC (N) et le pôle positif du condensateur flottant (C3) ; le huitième dispositif de commutation (S8, D8) est relié directement entre le point neutre de liaison CC (N) et le pôle négatif du condensateur flottant (C3) ; et
dans lequel chacun de la pluralité de réseaux de commutation à pont en H (206) est relié directement à une phase de sortie (A, B, C) du circuit, dans lequel les phases de sortie du circuit sont les phases de sortie (A, B, C) de l'étage inverseur.

2. Circuit selon la revendication 1, dans lequel les six dispositifs de commutation sont au moins les uns parmi des dispositifs à base de silicium ou des dispositifs à large bande interdite.

3. Circuit selon une quelconque revendication précédente, dans lequel l'étage inverseur de sortie est conçu pour fournir deux niveaux de tension ; ou dans lequel l'étage inverseur de sortie est conçu pour fournir une sortie triphasée.

4. Circuit selon une quelconque revendication précédente, dans lequel le réseau de commutation à pont en H (206) est conçu pour fournir une pluralité de niveaux de tension supplémentaires.

5. Circuit selon une quelconque revendication précédente, dans lequel les commutateurs de l'étage inverseur de sortie sont au moins les uns parmi des dispositifs à base de silicium ou des dispositifs à large bande interdite.

6. Procédé de fonctionnement d'un convertisseur multiniveaux de type H, le procédé comprenant :
la réception d'une entrée de tension d'alimentation ;
le couplage d'un réseau de commutation à pont en H à un point neutre de liaison CC (N) et à un étage inverseur de sortie ;
l'actionnement de commutateurs de l'étage inverseur de sortie qui sont conçus pour fournir plusieurs niveaux de sortie ;
l'actionnement de commutateurs du réseau de commutation à pont en H qui sont conçus pour fournir des niveaux de sortie supplémentaires, dans lequel les plusieurs niveaux de sortie sont différents des niveaux de sortie supplémentaires ;
dans lequel le réseau de commutation à pont en H (206) du convertisseur multiniveaux de type H est conçu selon la revendication 1.

7. Procédé selon la revendication 6, comprenant en outre le couplage d'un condensateur de liaison CC au réseau de commutation à pont en H.

8. Procédé selon les revendications 6 ou 7, dans lequel l'actionnement de commutateurs de l'étage inverseur de sortie comprend l'étape d'inhibition de circulation du courant à travers le réseau de commutation à pont en H ; ou
dans lequel l'actionnement de commutateurs du réseau de commutation à pont en H comprend l'étape d'inhibition de circulation du courant à travers les commutateurs d'étage inverseur de sortie.

9. Procédé selon l'une quelconque des revendications 6 à 8, dans lequel les six dispositifs de commutation sont au moins les uns parmi des dispositifs à base de silicium ou des dispositifs à large bande interdite.

10. Procédé selon l'une quelconque des revendications 6 à 9, dans lequel chaque réseau de commutation à pont en H de la pluralité de réseaux de commutation à pont en H est couplé à un étage inverseur de sortie respectif, et de préférence dans lequel le convertisseur multiniveaux de type H est conçu pour fournir une sortie triphasée.

11. Procédé selon la revendication 6, dans lequel l'étage inverseur de sortie est conçu pour fournir deux niveaux de tension, et dans lequel le réseau de commutation à pont en H est conçu pour fournir une pluralité de niveaux de tension supplémentaires.

12. Dispositif de commande pour un convertisseur multiniveaux de type H, le dispositif de commande comprenant :
une pluralité de circuits additionneurs (504) conçus pour recevoir des premiers signaux de référence et des signaux de décalage ;
une pluralité d'amplificateurs (506) en communication avec la pluralité de circuits additionneurs, dans lequel la pluralité d'amplificateurs sont conçus pour amplifier un signal qui est délivré en sortie par la pluralité de circuits additionneurs ;
une pluralité de comparateurs (502) en communication avec la pluralité d'amplificateurs, dans lequel la pluralité de comparateurs sont conçus pour recevoir un second signal de référence et des signaux de sortie de la pluralité d'amplificateurs ; et
une pluralité de sorties des comparateurs qui sont conçus pour être en communication avec le convertisseur multiniveaux de type H ;
dans lequel le convertisseur multiniveaux de type H est conçu pour commander un réseau de commutation à pont en H (206) qui est conçu selon la revendication 1.

13. Dispositif de commande selon la revendication 12, dans lequel les premiers signaux de référence sont des ondes triangulaires et le second signal de référence est un signal de référence de tension, et de préférence dans lequel les signaux de décalage fournis à chacun de la pluralité d'additionneurs fonctionnent dans différentes plages pour commander la commutation du convertisseur multiniveaux de type H.
